# EUROPEAN PATENT APPLICATION

(11) **EP 1 139 588 A2**
(43) Date of publication of application: **04.10.2001**
(21) Application number: 01103970.8
(22) Date of filing: 19.02.2001
(51) Int. Cl.: H04B 10/17

(54) **Optical transmission equipment and supervisory system thereof**

(30) Priority: 29.03.2000 JP 2000095200
(71) Applicant: Hitachi, Ltd., Chiyoda-ku, Tokyo 101-8010 (JP)
(72) Inventor: Kosaka, Junya, Hitachi, Ltd., Intl. Property Group, Chiyoda-ku, Tokyo 100-8220 (JP); Matsuoka, Tadashi, Hitachi,Ltd., Intl. Prop. Group, Chiyoda-ku, Tokyo 100-8220 (JP)
(74) Representative: Strehl Schübel-Hopf & Partner

(57) **Abstract**

The dependency on a wavelength makes it difficult to lengthen the distance as trying to make the density of the wavelength division multiplexing higher but to enhance the density of the wavelength as trying to make the distance longer. In order to overcome such difficulty, the present invention is arranged to provide an optical signal expander module (30A) having a group of wavelength bands in a transmission system. This expander is served to solve the problem of the dispersion and realize both the long distance and the high density of the wavelength division multiplexing that can be traded off.

## Description

### BACKGROUND OF THE INVENTION

The present invention relates to a WDM (Wavelength Division Multiplexing) optical transmission equipment and more particularly to the optical transmission equipment located in a relay station.

In order to reduce the cost of a transmission system, it has been more and more requested to improve a transmission rate as well as to make the WDM density higher and the distance longer. In general, however, the improvement of the transmission rate has an obstacle to realizing dispersed compensation over a wide band. The dispersed compensation means compensation of a waveform distortion of signal light based on the dispersion of the signal light on a transmission line. In the line fiber are contained dispersed parameters depending on a wavelength of the signal light. These parameters are more accumulating as the fiber length is made longer. Especially in the case of efficiently realizing the dispersed compensation for a wide band in a lump, it is quite difficult to realize the optimal compensation over all bands.

The optical transmission technology effectively employs an optical amplifier. In the optical amplifier, however, the noise characteristic and the gain characteristic for restricting the transmission characteristics depend on the wavelength. In the case of placing the optical amplifiers at some steps on the transmission line, the critical number of the steps of the optical amplifier, that is, the critical distance of the transmission distance is variable depending on the wavelength of the signal light. In the WDM transmission, therefore, a system has been generally configured to suit to the worst characteristic wavelength, that is, the wavelength that has the shortest transmission distance limit. This is because the signal light of any wavelength may be reliably transmitted. As the technology on the WDM, it is possible to refer to the optical amplifier described in JP-A-8-278523 (corresponding with U.S. Patent No.5675432).

The wavelength dependency as described above has difficulty in making the transmission line longer as making the WDM density higher. This tradeoff is an obstacle to configuring the transmission system at low cost.

Further, a new technology has been studied for dropping or adding a signal wavelength of part of a wavelength band in a station house located on a transmission line. With positive application of such a technology, the multiplexed signal lights transmitted on the same fiber by different station houses may be transmitted as WDM light. In such a case, since the transmission condition depends on the signal wavelength, it has become difficult to realize the efficient dispersed compensation on all bands in a lump, which has been traditionally adopted in this technical field.

### SUMMARY OF THE INVENTION

It is an object of the present invention to provide an optical transmission system which is arranged to have an optical signal expander which operates by making the corresponding group of wavelength bands so as to solve the problem on the dispersion and realize a longer distance and a higher WDM density, both of which can be traded off.

### BRIEF DESCRIPTION OF THE DRAWINGS

Preferred embodiments of the present invention will now be described in conjunction with the accompanying drawings, in which;
Fig. 1 is a block diagram showing an optical transmission system according to an embodiment of the present invention;
Fig. 2 is a block diagram showing an optical transmission equipment according to an embodiment of the present invention;
Fig. 3A is a block diagram showing a wavelength demultiplexer included in the embodiment of the invention;
Fig. 3B is a block diagram showing a wavelength multiplexer included in the embodiment of the invention;
Fig. 4 is a block diagram showing an optical transmission equipment according to an embodiment of the invention;
Fig. 5 is a block diagram showing an optical transmission equipment according to an embodiment of the invention;
Fig. 6 is a block diagram showing an adding and dropping transmission equipment according to an embodiment of the invention; and
Fig. 7 is a block diagram showing a bidirectional optical transmission system according to an embodiment of the invention.

### DESCRIPTION OF THE EMBODIMENTS

The embodiments of the invention will be described with reference to the appended drawings.

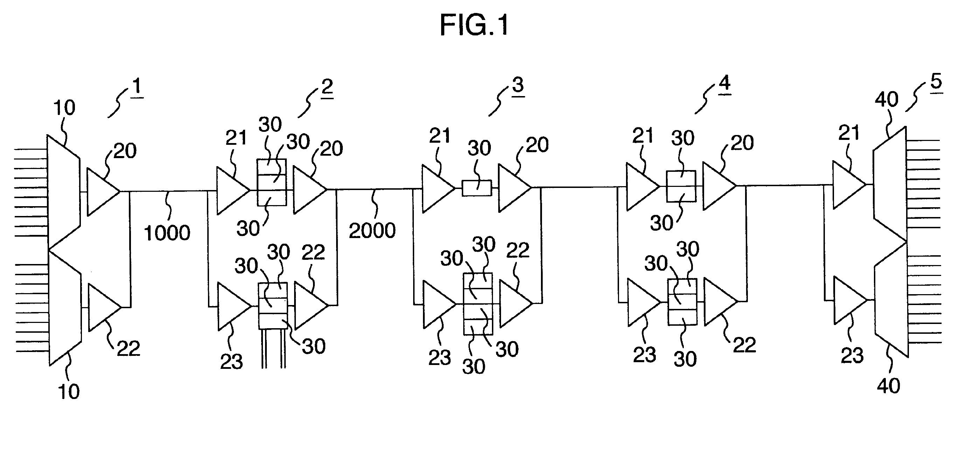

Fig. 1 is a block diagram for describing an arrangement of an optical transmission system according to an embodiment of the present invention. This optical transmission system is arranged to transmit a signal from an end station 1 to another end station 5. Between the end stations 1 and 5 is located relay stations 2, 3 and 4. The relay station 2 enables to perform demultiplexing or multiplexing about plural wavelengths. In amplifying the WDM signal, the WDM signal is separated into a Blue Band ranging from 1530 to 1545 nm and a Red Band ranging from 1547 to 1560 nm, at each of which bands the corresponding WDM signal is amplified in a lump.

In the end station 1, light signals transmitted by an optical transmission equipment (not shown) are multiplexed in an optical multiplexer 10. The multiplexed light signal is amplified by optical amplifiers 20 and 22, from which the amplified light signals are sent to a coupler (not shown) in which they are multiplexed. Then, the multiplexed light signal is inputted into the transmission fiber 1000. The signal light transmitted on the long transmission fiber 1000 is separated in bands by a WDM demultiplexer (not shown) located in the relay station 2. Then, the demultiplexed signal lights are again amplified by the corresponding optical amplifiers 21 and 23. The amplified light is demultiplexed by an optical demultiplexer (not shown). Each demultiplexed light with the corresponding wavelength is passed through an operation unit (OU) 30 at a time, amplified by the optical amplifiers 20 and 22 and sent out to the transmission fiber 2000. Also in the relay stations 3 and 4, the similar transmission is executed. Then, the light signal is separated in bands by a WDM demultiplexer (not shown) located in the end station 5 and is again amplified by the optical amplifiers 21 and 23. The amplified WDM signal is separated into light signals of monochrome wavelengths by a WDM demultiplexer 40 and then are converted into the corresponding electric signals by an optical receiver (not shown).

Herein, the processing unit 30 may be an optical signal expander 30A, a dispersed compensator 30B, a just transmission fiber 30C, an optical adding and dropping module 30D or the like, the details of which will be discussed below. One processing unit 30 may be installed between the optical amplifiers 21, 23 and the optical amplifiers 20, 22 or any combination of parallelly connected processing units may be installed therebetween. Herein, the light signal expander 30a and the optical adding and dropping module 30D are allowed to pass each light signal of a monochrome wavelength. The dispersed compensator 30B and the transmission fiber 30C are allowed to pass a wavelength multiplexed light signal.

The transmission system arranged as described above may keep a non-relaying transmission interval according to each wavelength band against the light signal from the end stations 1 to 5 though only one transmission fiber is placed. The non-relaying transmission interval termed herein means a transmission interval between the optical transmitter and the next optical receiver. For example, for the signal light with part of band, the interval from the end stations 1 to 5 corresponds to the non-relaying transmission interval, while for the signal light with another part of band, the interval between the end station 1 and the optical signal expander corresponds to the first non-relaying transmission interval and the interval between the light signal expander and the next light signal expander or end station corresponds to the second non-relaying transmission interval.

More concretely, in the optical amplifier, the wavelengths contained in the red band have a relatively small wavelength dependency of a gain and noise characteristic and thus have a more excellent characteristic, which wavelength is more advantageous to lengthening the transmission fiber.

If the dispersed compensation is restrictively directed to the signals with such bands, those signals may be transmitted from the end stations 1 to 5 without any relay.

On the other hand, the wavelengths contained in the blue band have a relatively large wavelength dependency of a gain and noise characteristic and thus has an inferior characteristic, which wavelength is less advantageous to lengthening the transmission fiber. For these sorts of signals, it is preferable to place the light signal expander on the relay stations on the way for the purpose of shortening the non-relaying transmission interval.

In the case of transmitting the light signals of all the wavelengths ranging from 1530 nm to 1560 nm in a lump without any relay, the transmission distance is limited by the adverse effect of the wavelength characteristic that has an inferior light gain characteristic and noise characteristic. Further, since the dispersed compensation is required over a wide band, the transmission distance is more limited.

The present invention makes it possible to multiplexed-transmit the light signals having respective transmission intervals on the same fiber. The present invention further facilitates the configuration of the transmission intervals according to the wavelength band, which makes it easier to make the transmission system longer and the WDM density higher, thereby lowering the cost at which the system is configured. Further, the transmission system may be built flexibly for each wavelength band.

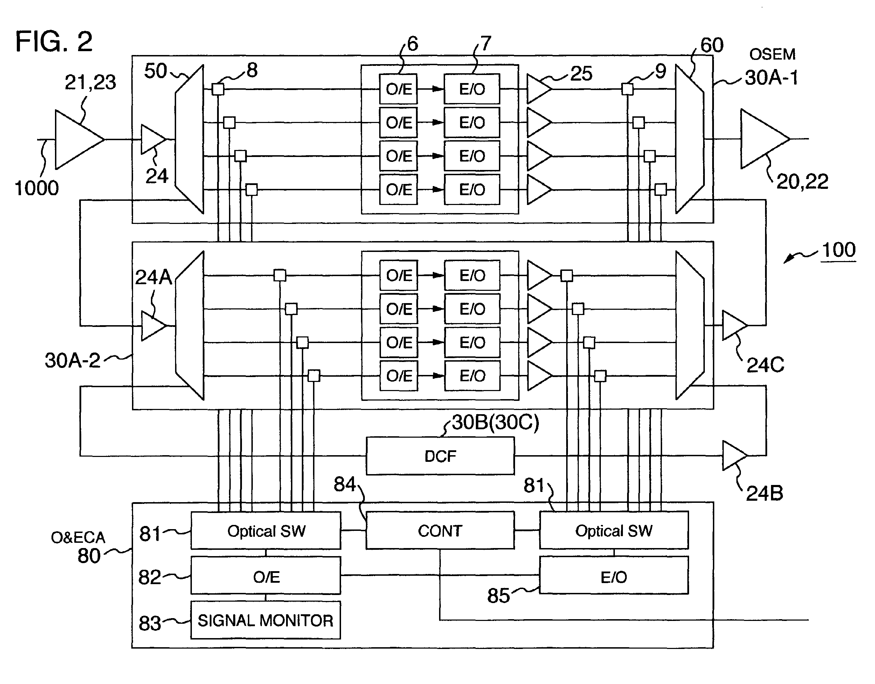

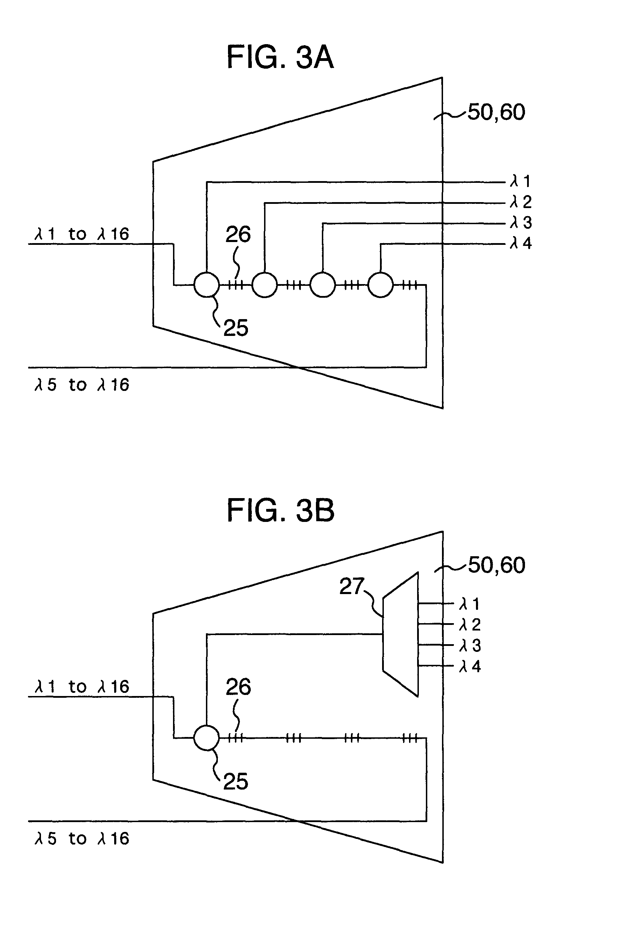

The optical transmission equipment according to another embodiment of the invention will be described with reference to Figs. 2 and 3. Herein, Fig. 2 is a block diagram showing an optical transmitting equipment located in the relay station. Fig. 3 is a block diagram showing a demultiplexer or a multiplexer.

Fig. 2 shows an optical transmission equipment located in the relay station described with conjunction to Fig. 1. A 16-wavelength division multiplexing signal sent from the transmission fiber 1000 is amplified by the optical amplifiers 21 and 23 and then inputted into an optical signal expander module (OSEM) 30A-1. The signal is amplified by a low-gain optical amplifier 24 located for compensating for a loss of an optical demultiplexer. Then, the signals of four wavelengths are inputted into the inside, while the remaining signals of 12 wavelengths are inputted into the light signal expander module 30A-2. After amplified by the low-gain optical amplifier 24A, the signals of four wavelengths in the 12 wavelengths are inputted into the inside, while the remaining signals of eight wavelengths are inputted into the dispersed compensator module 30B. The signals of 8 wavelengths are dispersedly compensated in a lump by the dispersed compensator module 30B and then amplified by the optical amplifier 24B. Then, the amplified signals are again passed through the optical signal expander module 30A-2, the optical amplifier 24C and the optical signal expander module 30A-1 in this order and then multiplexed. Then, the signals of 16 wavelengths are inputted into the optical amplifiers 20 and 22 and then amplified therein.

On the other hand, the signals of four wavelengths put inside of the optical signal expander module 30A-1 is partially branched by a light branch module 8 and then put into an optical & electrical channel analyzer :O&ECA) 80. The signal passed through the optical branch module 8 is converted to the electric signal (O/E) by the optical receiver 6. Then, the converted signal is subject to signal waveform adjustment and timing adjustment and identified and then reproduced. Then, the signal is again converted to the optical signal (E/O) in the optical transmitter. The optically converted signal is amplified by the optical amplifier 25 and then is passed through the optical branch module 9. Then, the signals of four wavelengths and 12 wavelengths are multiplexed by an optical multiplexer 60. This optical amplifier 25 serves to adjust the transmitted lights to a certain level and compensate for a loss of the optical multiplexer. It means that the low-gain optical amplifier is effective enough to be served for that purposes. The optical branch module 9 is served to receive the signal light inputted by the optical & electrical channel analyzer 80.

As described above, eight waves of multiplied 16 waves are temporarily relayed and then transmitted and the remaining eight waves are just passed through the dispersed compensator without any relay.

The ordinary relay transmission module is served to extract a B1 byte in an overhead portion for monitoring an error in the relaying interval and monitor an error in the relaying interval. On the other hand, the optical signal expander module of this embodiment is served to perform 3R operations (Reshaping, Retiming and Regenerating). The error monitoring operation is executed in the optical & electrical channel analyzer. In addition, the optical & electrical channel analyzer 80 will be described later.

In turn, the description will be oriented to the wavelength demultiplexer 50 for demultiplexing the WDM signal and the wavelength multiplexer 60 with reference to Fig. 3. The description will be expanded along the wavelength demultiplexer 50. It is served as the wavelength multiplexer 60 if the traveling direction of light is reversed.

Fig. 3A and 3B shows an arrangement of the wavelength separator, in which the WDM signal to be inputted contains 16 wavelengths of λ1 to λ16 multiplexed thereon. In Fig. 3A, the WDM signal passes through an optical circulator 25 and a Bragg grating 26 is served to reflect a wavelength of λ1. The optical circulator 25 has a function of allowing the light traveling from the left to the right as viewed in Fig. 3A to go straight but outputting the reflected light of the wavelength λ1 traveling from the right to the left into a third port from which the wavelength λ1 is picked up. Likewise, the wavelengths λ2 to λ4 are separated and then picked up respectively. On the other hand, 12 wavelengths λ5 to λ16 are outputted as they are, that is, as they are kept multiplexed. The wavelength separator shown in Fig. 3B is served to output the reflected optical signals λ1 to λ4 to the third port through the effect of one optical circulator and then separated into respective wavelengths through a waveguide type WDM module 27 from which the signals λ1 to λ4 are picked. On the contrary, 12 wavelengths λ5 to λ16 are outputted as they are, that is, as they are multiplexed.

In this embodiment, the dispersed compensator module 30B may be placed not only at the shown spot but also the output portion of the optical amplifier at the previous stage or the later stage. The location of the module 30B at such spots makes it possible to do the dispersed compensation basically about all the signals. The transmission fiber 30C may be installed at the position of the module 3B. In this case, eight of 16 waves multiplied on a signal is temporarily relayed and then transmitted, while the remaining eight waves are amplified and straightly transmitted without any relay.

This type of arrangement makes it possible to perform a multiplexing and demultiplexing operation for four wavelengths in a lump and thus simply group every several wavelengths in the optical signal expander module. In addition, the optical signal expander module, the dispersed compensator, the optical adding and dropping module, and the transmission fiber may be simply added to the arrangement. Of course, it goes without saying that the low-gain optical amplifier 24 may have a great contribution on compensating for a loss of the optical multiplexer and demultiplexer so that the connection of such components with any expander module may be made possible in the substantially same condition.

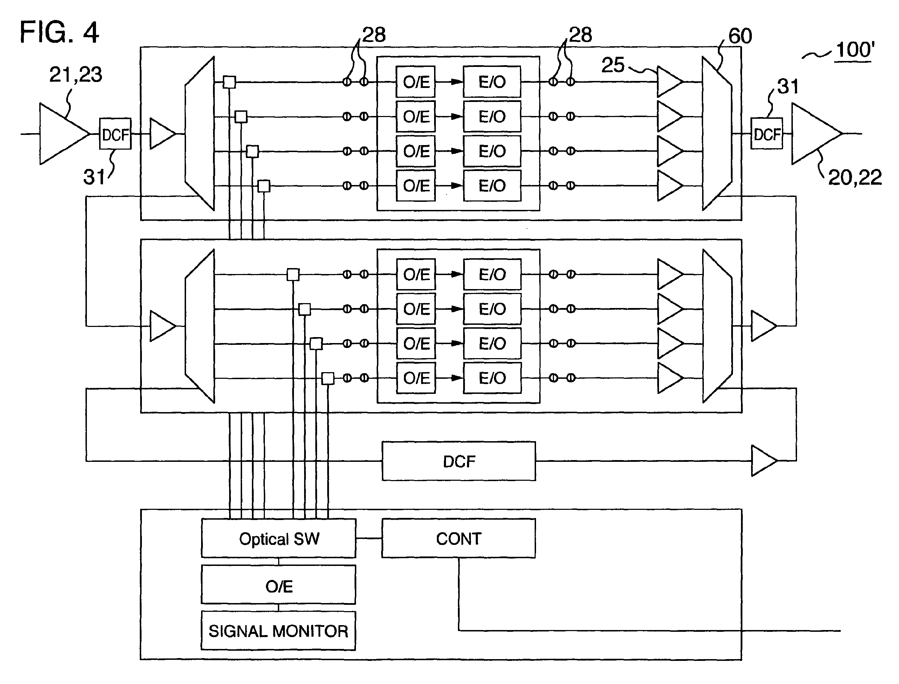

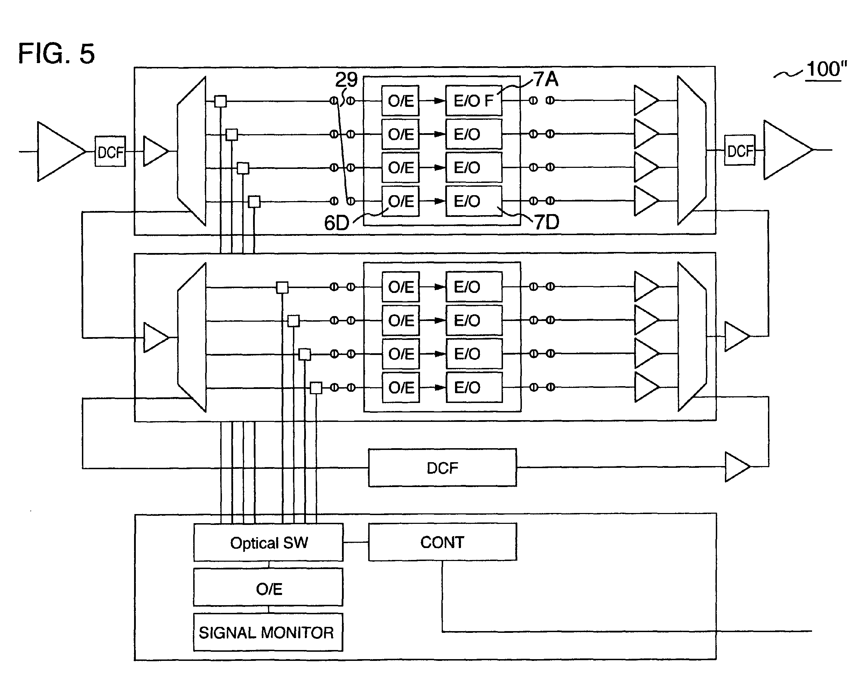

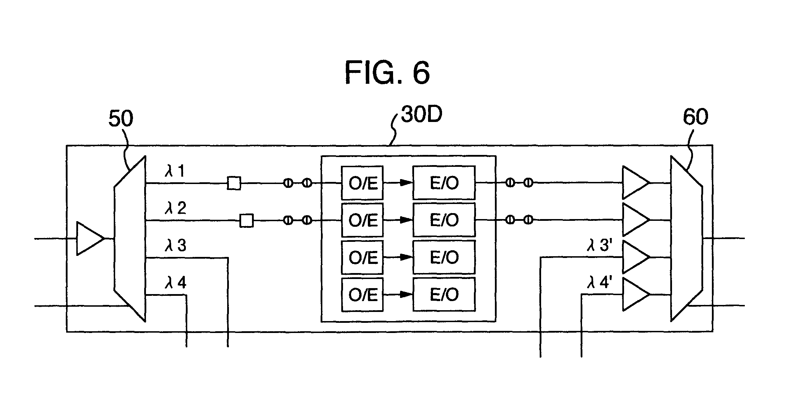

The optical transmission equipment according to another embodiment of the invention will be described with reference to Figs. 4 to 6, in which Figs. 4 and 5 are block diagrams showing the optical transmission equipment located in a relay station and Fig. 6 is a block diagram showing an optical adding and dropping module.

The optical transmission equipment shown in Fig. 4 additionally provides an optical connector 28 and a dispersed compensator 31, the optical connector 28 being located in the previous stage of the receiver provided in the optical signal expander of the optical transmission equipment shown in Fig. 2 and the later stage of the transmitter provided therein and the dispersed compensator 31 being located in the later stage of the optical amplifiers 21 and 23 and the first stage of the optical amplifiers 20 and 22. This addition provides this optical transmission equipment 100' with a light transponder function and an adding and dropping function. The optical branch module 9 located between the optical amplifier 25 and the optical multiplexer 60 and a partial function of the optical & electrical channel analyzer 80 are deleted from the optical transmission equipment shown in Fig. 4. The optical & electrical channel analyzer will be discussed below.

It is assumed that in the optical transmission equipment 100" shown in Fig. 5 the wavelengths of λ1 to λ3 are for the main use and the wavelength of λ4 is for the preliminary use. Assuming that the optical transmitter 7A of λ1 is out of order, the checker who found it reports the fact to the end station 1 so that the signal of λ1 may be stopped. Then, the optical fiber 29 connecting between the optical connectors 28 connecting to the optical transmitter 7A is replaced with the receiver 6D of λ4 that belongs to the preliminary system. Then, the maintenance person reports to the end station 5 that the preliminary system is used and makes the end station 1 restart the signal transmission at the wavelength λ1. In general, though the optical transmitter sends out the light having a special narrow wavelength, the optical receiver may be operated over a wide band. Hence, if the optical transmitter is out of order, the transmission is made possible by changing the wavelength. Moreover, by using a wavelength-variable light source for the optical transmitter 7D of the preliminary system, the transmission is made possible without changing the wavelength. As mentioned above, the provision of a connector between the optical demultiplexer 50 and the optical receiver 6 provides the optical transmission equipment with a transponder function and a transmitter function of the preliminary system.

Fig. 6 shows an optical adding and dropping module 30D, which is arrangement of the optical signal expander module 30A, is served to drop two wavelengths λ3 and λ4 for communication from the end station 1 to the end station 2 and receive these wavelengths through a receiver (not shown) and the light signals of two wavelengths λ3' and λ4' from the transmitter (not shown) are added from the connector at the previous stage of the wavelength multiplexer 60. In the arrangement shown in Fig. 4, the dispersed compensator 31 located at the later stages of the optical amplifiers 21 and 23 is optimally designed for a signal to be dropped and the dispersed compensator 31 located at the previous stage of the optical amplifiers 20 and 22 is optimally designed for a signal to be added. This arrangement makes it possible for the optical adding and dropping module 30D to simply add and drop a light signal as well as temporarily relay a signal not to be added or dropped during the transmission. The arrangement thus allows the signal to be simply switched without being conscious of a transmission distance, concretely, the signal to be determined to be added and dropped or not to be done.

In turn, the description will be oriented to the optical & electrical channel analyzer with reference to Fig. 2.

In response to the request for increasing the transmission capacity, it has been more and more requested to enhance the conventional low-speed system in which any parameter on a transmission path may be ignored to a super high speed and super long distance transmission system in which parameters on a transmission path may be managed with high accuracy when the end stations are built.

The conventional transmission path has been configured as a reliably configured system for coping with a reliably treatable simple abnormality such as "line disconnection". For the reliable configuration, it has been likelihood that it is satisfactory to disconnect the simple transmission path from the end station and the end station itself may detect an abnormality occurring therein.

However, the optical transmission is a special case and thus the end station cannot be disconnected from the transmission line. For configuring a highly reliable system, it is important to inclusively manage the end stations and the transmission path. In this embodiment, the provision of the optical branch module to the optical & electrical channel analyzer in the optical signal expander allows the optical signal expander to be connected to the optical & electrical channel analyzer. Further, the optical & electrical channel analyzer enables to remove or prevent a possible shortcoming taking place in the end station and the transmission path for quite a short time. When a certain shortcoming takes place, it is possible to analyze what degree of shortcoming takes place in what module. This is effective in suppressing the adverse effect caused by the system failure to a minimum.

In the initial introduction, until the operation becomes stable, this system enables to restrictively analyze only a channel where an error takes place. In response to meet the request given by the operator, this system may be built to have several stages.

The optical & electrical channel analyzer will be concretely described.

For example, in the case that the transmission quality is degraded if an abnormality takes place in the wavelength λ3, the EM (Element Manager) or LC (Local Craft) outside the optical transmission equipment of this embodiment is served to report the abnormality. In response to this report, the information that the abnormality takes place is transferred to all the sites where the optical & electrical channel analyzer is placed. In general, when the information is transferred, it is overlapped with a light monitoring signal delivered on the transmission system together with the signal light.

The information for reporting the abnormality occurrence transferred as above serves to remotely set the optical & electrical channel analyzer to λ3 at all the sites where the analyzer is placed.

In this embodiment, an optical switch 81 is provided for remotely switching a receiving signal and a transmission signal. In the actual transmission of the light signal, it is impossible to predict which of the channels and which of the sites the abnormality suddenly may take place. Hence, the remote setting is quite important.

Part of the received light signal of λ3 sent from the optical signal expander module 30A is branched by the optical branch module 8 and then inputted into the optical & electrical channel analyzer 80. In the analyzer 80, a signal having a given wavelength (λ3 in this case) is inputted into the optical receiver 82 located in the analyzer by means of the optical switch 81. Whether or not the signal received by the optical receiver is properly transmitted is monitored by an overhead signal analyzer (B1 monitor) 83. If no abnormality is found, it means that no shortcoming takes place on this line. Hence, it is considered that the installed module involves any shortcoming.

In order to analyze whether or not the module may receive in the most severe condition, an optical attenuator may be provided at the input unit so that the minimum input may be always inputted into the receiver.

Further, the received signal is again inputted into the optical signal expander by means of the optical transmitter 85 having a variable wavelength and may be transmitted by the optical branch module 9 inside of the optical signal expander 30A.

In the arrangement of this embodiment, the optical & electrical channel analyzer is served to bypass the failure-suspicious optical receiver or the optical transmitter inside of the optical signal expander module and to transmit a signal through the properly-operated optical receiver or transmitter located therein. That is, the analyzer provides a capability of separating a site where failure takes place.

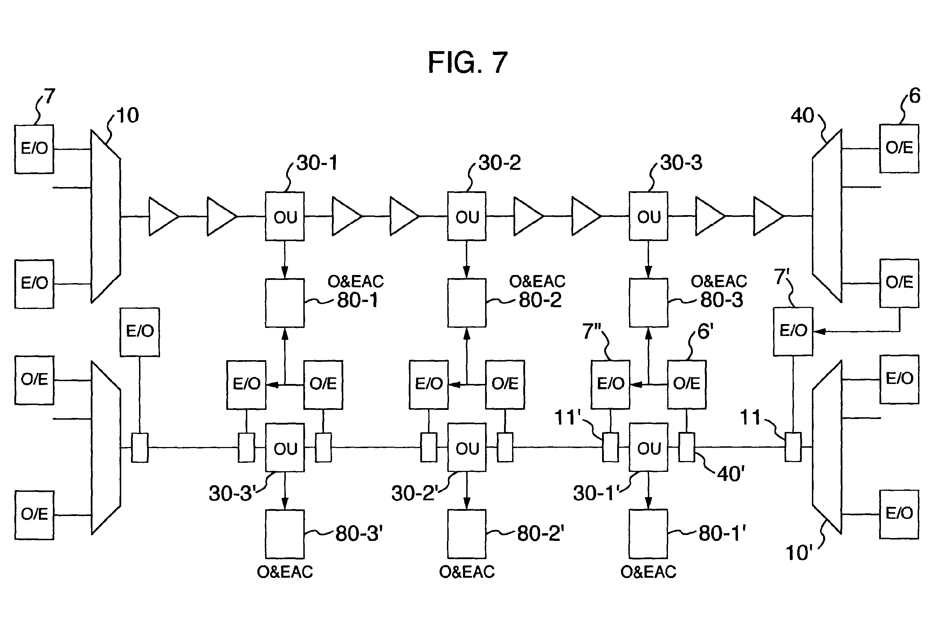

The analyzing routine will be described with reference to Fig. 7. Herein, Fig. 7 is a block diagram showing a bidirectional optical transmission system. In Fig. 7, the upper half shows a W-E (from west to east) transmission path and the lower half shows an E-W (from east to west) transmission path. For simplifying the drawing, on the W-E transmission path, a block about a light monitoring signal is omitted and on the E-W transmission path the optical amplifier is omitted.

If abnormality takes place in any transmission line, the receiving end of the end station detects the abnormality. The information for indicating the abnormality is overlapped with any signal delivered on the transmission system together with the light signal when it is transferred. In this embodiment, the signal to be overlapped with the information is the light monitoring signal for the E-W transmission system, which is transmitted in opposition to the subject W-E transmission system. The information for indicating the abnormality occurrence detected on the receiving end of the end station located in the W-E transmission system is overlapped with the light monitoring signal and then is transmitted from the light monitoring signal transmitter 7' of the E-W transmission system. The transmitted light monitoring signal is inputted into the E-W transmission line by means of the light monitoring signal multiplexer 10', demultiplexed by means of the light monitoring signal demultiplexer 40', and received by the light monitoring signal receiver 6' so that the information for indicating the abnormality occurrence may be conveyed to the optical & electrical channel analyzer 80. The information transferred as described above enables the optical switch inside of the optical & electrical channel analyzer at each site to select the wavelength λ3 in which any abnormality takes place.

As mentioned above, the wavelength λ3 where abnormality takes place is selected by the optical switch. In the subsequent abnormality analyzing process, whether or not the wavelength is abnormal or normal, the optical switch may be switched remotely from the EM (Element Manager) or LC (Local Craft) outside of the optical transmission equipment at a proper time.

Hereafter, the description will be oriented to the analysis of the abnormality in the line and the optical signal expander module.

For example, if abnormality takes place in the shown optical signal expander module 30-2, the optical & electrical channel analyzer operates to detect abnormality not at the spots 80-1 and 80-2 (shown) but at the site 80-3. If abnormality takes place on the line between the optical signal expanders 30-1 and 30-2, likewise, the analyzer operates to detect abnormality not at the spots 80-1 and 80-2 but the spot 80-3. That is, if in this system abnormality takes place in the receiving end of the end station, the optical & electrical channel analyzers 80-1 and 80-2 do not detect abnormality and the analyzer 80-3 detects abnormality, it is possible to specify that the abnormality takes place in the optical signal expander module 30-2 or on the line between the expander module 30-1 and 30-2.

That is, according to the invention, the detection of abnormality by the installed optical & electrical channel analyzers allows the abnormality at the optical signal expander at a specific spot or on a specific portion of the line to be detected.

More concretely, the analyzing routine of the line and the optical signal expander module and the returning routine to be executed if abnormality takes place in the optical signal expander module will be described more concretely.

As the analyzing and returning routines, it is preferable that an operation is executed to take a first step 1 of removing abnormality resulting from the transmission line and a second step 2 of making sure of the optical signal expander module or transmitter and receiver where the abnormality takes place.
1. An operation is executed to make sure that no abnormality of the line condition (line fiber loss, optical fiber connector loss, and the like) takes place or no abnormality of the line design (overall band dispersed compensation, dispersed compensation distribution, and the like) takes place.
   (In a case that the number of wavelengths is small) The optical signal expander module according to the invention enables to output a signal having a different wavelength from that of the signal inputted into the optical signal expander itself by switching the optical connector. If an abnormality is detected in a certain wavelength and the number of wavelengths being transmitted is small, the wavelength of the coming signal is switched into some wavelengths prepared in the optical signal expander module before the signal is transmitted. This is for making sure that no problem takes place in transmitting the wavelengths therearound. This is because if a problem resulting from the line takes place, the similar problem can be detected in the neighboring wavelengths. If no abnormality cannot be detected in the neighboring wavelengths, the operation shifts to the following routine 2.
   (In a case that the number of wavelengths is great)
   The operation is executed to make sure of whether or not the similar problem takes place in the neighboring wavelengths having been transmitted. This is because if the problem resulting from the line takes place, the similar problem can be detected in the neighboring wavelengths. If no similar abnormality cannot be detected in the neighboring wavelengths, the operation shifts to the following routine 2.
2. If no abnormality on the line is specified by the routine 1, the operation is executed to make sure of the optical signal expander module or the transmitter and the receiver where any abnormality takes place.

The optical switches inside of the optical & electrical channel analyzer at all the sites are tuned to the wavelength in which the abnormality detected on the receiving end takes place.

As mentioned above, the operation is executed to specify the optical & electrical channel analyzer at the site where abnormality is detected and the optical & electrical channel analyzer at the site where no abnormality is detected, for the purpose of specifying the optical signal expander module where abnormality takes place (at a time when the abnormality on the transmission line has been already removed).

The optical signal expander module in which abnormality is specified is replaced with the sound optical signal expander module.

The foregoing routine makes it possible to specify the abnormality and replace the defective module with a sound module, thereby returning the problematic transmission system to the sound state.

The first feature of this method is to easily analyze the abnormality of the transmission path through the optical signal analyzer module.

The second feature of this method is to easily make sure of whether or not some problem takes place in plural wavelengths by making use of the general fact that "several wavelengths are being transmitted on a transmission path in a lump and if abnormality takes place on the transmission path, abnormality is supposed to take place on one of these wavelengths" and by making use of the fact that optical signal expander module handles a plurality of wavelengths and the fact that only one signal wavelength inputted into the optical signal expander module can be switched into these wavelengths.

The optical & electrical channel analyzer can be used for the following various forms according to the maintenance condition.
1. Changeable Optical & Electrical Channel Analyzer
It is used only when the transmission system has risen and abnormality takes place. It is installed outside of the system or carried by a maintenance person.
2. Permanent Optical & Electrical Channel Analyzer Provided with Remote Optical Channel Switch
   It is operated to remotely switch the channel in which abnormality takes place by means of a transmission signal sent from a specific remote site when the transmission system has risen or if abnormality takes place and then to analyze the signal.
3. Permanent Optical & electrical Channel Analyzer Provided with Self-changeable Optical Channel Switch

It is operated to switch all the signal wavelengths at certain time intervals one after another and intermittently monitor all the wavelengths through the optical & electrical channel analyzer.

For example, the following customer's requests may be considered.
A) A customer desires to "positively install all the optical & electrical channel analyzers"
   → Changeable Optical & Electrical Channel Analyzer
B) A customer desires to "be able to specify a defective portion within one day when abnormality is detected by the end station.
   → Changeable Optical & Electrical Channel Analyzer
C) A customer desires to "be able to remotely specify a defective portion when abnormality is detected by the end station."
   → Permanent Optical & Electrical Channel Analyzer Provided with Remote Optical Channel based on Light Monitoring Signal
D) A customer desires to "monitor a defect of all the optical signal expanders in order of "minutes".
   → Permanent Optical & Electrical Channel Analyzer Provided with Self-changeable Optical Channel Switch

As described above, even a small number of optical & electrical channel analyzers enables to greatly improve the reliability of the transmission system. Further, since the analysis is made possible without visiting on all the sites, it is possible to greatly reduce the time taken in doing service and the cost taken in the maintenance service.

According to the invention, the optical signal expander having a group of wavelengths in the transmission system is provided for making the transmission distance longer and the wavelength multiplexing density higher in transmission. Further, the optical & electrical channel analyzer is served to suppress the adverse effect caused by the system failure to a minimum.

## Claims

1. An optical transmission equipment comprising:
a first optical amplifier (21) for amplifying a first wavelength division multiplexing light signal;
a first processing unit (30) for extracting a wavelength of a first band from the wavelength division multiplexing light signal amplified by said first optical amplifier;
a second processing unit (30) for extracting a wavelength of a second band from the second wavelength division multiplexing light signal from which said first band wavelength is removed; and
a second optical amplifier (20) for being input with signal light after wavelength division multiplexing with respect to a third wavelength division multiplexing light signal output by said second processing unit and a fourth wavelength division multiplexing signal output from said first processing unit.

2. An optical transmission equipment comprising:
a first wavelength division multiplexing signal optical amplifier (21);
a second wavelength division multiplexing signal optical amplifier (20);
a first processing unit (30) for a wavelength band provided between said first and second wavelength division multiplexing signal optical amplifiers; and
a second processing unit (30) for a wavelength band.

3. The transmission equipment of claim 1 or 2, wherein said processing unit (30) includes a wavelength demultiplexer (50) for demultiplexing the wavelength division multiplexing light signal into individual wavelength signals, an optical receiver (6) for converting the demultiplexed light signal into an electric signal, an optical transmitter (7) for converting an electric signal into a light signal, and an optical multiplexer (60) for multiplexing the light signals to the wavelength division multiplexing light.

4. A relay station comprising:
a wavelength demultiplexer for demultiplexing a wavelength band into a first wavelength band and a second wavelength band;
a first optical amplifier (21) for amplifying a first wavelength band on the input side of said relay station;
a second optical amplifier (20) for amplifying the first wavelength band on the output side of said relay station;
a third wavelength band processing unit (30) located between said first and second optical amplifiers; and
a fourth wavelength band processing unit (30).

5. The relay station of claim 4, wherein said processing unit includes a wavelength demultiplexer (50) for demultiplexing the wavelength division multiplexing light signal into individual wavelength signals, an optical receiver (6) for converting the demultiplexed light signal into an electric signal, an optical transmitter (7) for converting the electric signal into the light signal, and an optical multiplexer (60) for multiplexing the light signals to the wavelength division multiplexing light.

6. The relay station of any preceding claim, wherein said processing unit (30) includes a dispersed compensator (30B).

7. The relay station of any one of claims 1 to 5, wherein said processing unit (30) is a transmission fiber (30C).

8. An optical transmission system having relay stations (2, 3, 4) between a transmitting end station (1) and a receiving end station (5) and for transmitting a wavelength division multiplexing light signal,
wherein said relay stations serve to demultiplex a wavelength band into a first wavelength band and a second wavelength band and amplify the wavelength division multiplexing signal on the inlet and the outlet of said relay stations and perform signal processing with narrower wavelength band between a first optical amplifier (21) located at the inlet of said relay station and a second optical amplifier located at the outlet of said relay station.

9. The transmission system of claim 8, wherein said signal processing is a light to electric conversion and an electric to light conversion.

10. The transmission system of claim 8, wherein said signal processing is dispersed compensation.

11. The transmission system of claim 8, wherein said signal processing is fiber transmission.

12. An optical transmission system including relay stations (2, 3, 4) between a transmitting end station (1) and a receiving end station (5) and for transmitting a wavelength division multiplexing signal, each of said relay stations comprising:
a demultiplexer (50) for demultiplexing into each wavelength signals between a first optical amplifier (21) located at the inlet of said relay station and a second optical amplifier (20) located at the outlet thereof;
a plurality of couplers (8) for dividing the light of the demultiplexed wavelength signal;
a plurality of optical signal receivers (6);
a plurality of optical signal transmitters (7);
an optical multiplexer (60) for multiplexing a plurality of light signals having respective wavelengths from said plurality of optical signal transmitter;
an optical switch (81) for selecting a signal divided by said plurality of couplers; and
a second optical signal receiver (82) for receiving the light of said selected wavelength.

13. A relay station (2, 3, 4) located between a transmitting end station (1) and a receiving end station (5), comprising:
a demultiplexer (50) for demultiplexing into each wavelength band signals between a first optical amplifier (21) located at the inlet of said relay station and a second optical amplifier (20) located at the outlet of said relay station;
a plurality of couplers (8) for dividing the light of the demultiplexed wavelength;
a plurality of optical signal receivers (6);
a plurality of optical signal transmitters (7);
an optical multiplexer (60) for multiplexing optical signals having respective wavelengths sent from said plurality of optical signal transmitters;
an optical switch (81) for selecting the signal divided by said plurality of couplers; and
a second optical signal receiver (82) for receiving the light having the selected wavelength.
